# EUROPEAN PATENT APPLICATION

(11) **EP 1 328 102 A1**
(43) Date of publication of application: **16.07.2003**
(21) Application number: 02360027.3
(22) Date of filing: 14.01.2002
(51) Int. Cl.: H04L 29/06

(54) **Method and system for managing the access to a communication network based on authentication data**

(71) Applicant: ALCATEL, 75008 Paris (FR)
(72) Inventor: Chantrain, Dominique, 2650 Edegem (BE); Daenen, Koen, 3150 Haacht (BE)
(74) Representative: Rausch, Gabriele, Dr.

(57) **Abstract**

The invention comprises a device and a method of managing the access to a network, said network including an access server, wherein said access server manages the connection of a remote client computer,
said access server forwarding authentication request delivered by said remote client to a connection policy server,
said connection policy server loading from a database rules and information, which are executed to determine whether said authentication request may be forwarded to an authentication-server or not, or/and to determine to which authentication-servers said authentication request has to be sent to, or/and determine when or/and in which form the authentication request has to be forwarded,
depending on the result of said execution and said determination said connection policy server blocks or forwards the authentication request to one or more specific servers, in particular authentication server, or/and modifies or/and delays said authentication request before forwarding.

## Description

### Technical Field of the Invention

As networks become more intelligent, mechanisms are needed for applications to interact with these network elements in order to optimally lever the capabilities of the network. For example, an IP gateway (like broadband access server (BAS) for DSL) is used to establish sessions from the user to the network, including configuring the IP parameters of the terminal. This means the BAS has the knowledge about the on-line time of a user, at what IP address he can be reached etc. In order to get this information to the application servers (who can then build applications on this present awareness) one could introduce separate dedicated interfaces to the network element. However, this would lead to the introduction of a multitude of interfaces and protocols, while in many cases the information is already available in protocols and interfaces used in a different context. Referring to the problem that is solved by this invention, the required parameters can be obtained from the RADIUS message or request. RADIUS is a standard protocol that is used between a BAS and an authentication server, to transfer access data e.g. login information. In the RADIUS protocol several messages are defined which can be divided in three categories: authentication related massages, accounting related messages and unsolicited messages.

The BAS forwards the access data to the authentication server The authentication server then checks if the access data is valid, to acknowledge the request.

However, this would mean that the network element now has to duplicate some messages to different types of servers (e.g. both to an accounting server and to a present server). This could be achieved by adapting the internal logic of the network element, but in the rapidly evolving environment of current IP networks, this approach would not offer sufficient flexibility. A separate functional entity is needed to solve this issue. This functional entity can be referred as a "protocol interceptor for RADIUS".

### Prior Art

Network sniffers (see http://www.distinct.com/monitor/monitor.htm for an example) can be inserted on a physical interface between two machines to monitor the protocols running over the cable. These machines are typically used to debug communication between two machines. These devices (HW or SW) parse and analyse the protocols and present them to the user. However, they do not offer functions such as duplicating or adapting protocol messages before sending them to a 3rd machine. These are simple monitoring devices. In addition, they are typically associated with a single interface between two machines. So, if one would like to intercept RADIUS messages from the same IP gateway to an authentication server, two separate machines are needed.

In environments where protocols tend to change and are regularly upgraded, typically mediation devices (protocol converters) are inserted to translate a first protocol (or protocol dialect) to another. Like the network sniffers, these machines are typically associated with one specific interface, and they are often limited to a specific protocol translation.

In general, when introducing application platforms in the network, there are different solutions.
One approach builds an application platform at a higher layer than the network elements. In this case, the application platform is not located in the main data stream, but receives triggers from network elements that are processing and forwarding the traffic.
A second approach introduces a new device in the data stream, analysing all data packets and retrieving the relevant information. This approach however has important scalability problems, as it introduces a new bottleneck in the data stream.

RADIUS proxy servers exist to split the complexity of condition that has to be checked to allow an end-user setting up a new connection. The check on username and password is typically split from the checks on network conditions as e.g. the availability of resources. The latter part is typically done by a machine acting as a RADIUS proxy servers, and performed for all access requests in one proxy server. The actual AAA server does the first. Typically a separate AAA server is configured per domain. The said RADIUS proxy servers however does not bring the RADIUS attributes to the level of applications in order to relate them to the end-user known by the system. Associating the requests to the end-user is done by this invention in order to apply policies related to the end-user.

The solution proposed here fits in the first approach but not in the second one. The solution makes an adaptation of the first approach, so that a smooth integration in an existing network is possible. This smooth integration is an important part of the invention.

### Background of the invention

The access or Internet service provider wants to be able to force the end-user to load his portal-page or services before connecting to another VPN or service. This gives him the opportunity to provide a captive portal with business opportunities.

The solution disclosed in this document solves also another problem.

The access or Internet service provider wants to be able to control the order in which the end-user connects different networks. The provider intends to force the end-user to connect first to the network that he (the provider himself) has under control (also called VPNO in this document). In this network, the provider can force the client to visit his sites.

Once the user has been connected to VPNO, the CPRS can relate other requests from the same user to each other. This relation can be used by the provider for applying policies on these further access requests or for monitoring these accesses in the related context.

### Summary of the invention

To implement the invention an application should be installed on the end-user PC that sets up a PPP-connection to the VPNO and configures the portal on VPNO as "home page". This solution however does not force the end-user to access a specific home page. In the standard configuration, the PPP (connection protocol) session is terminated in the BAS (broadband access server, remote access server). The BAS forwards the login information using the RADIUS protocol to the authentication server.
With a standard PPP client the end-user specifies the VPN, by sending a corresponding message to the BAS. There is no guarantee that the user goes first to the "home-page" in VPN0.

One possible solution that forces the end-user to visit the portal of VPNO filters and modifies the information stream up to the application level. This filter can be installed on the BAS, because the stream from the user to any VPN always passes the BAS. If the BAS is capable of manipulating http request, it can insert the portal in the response of an http request to any VPN. This solution is only applicable if the access server is able to change content. Most of the BAS installed today in the market do not have this functionality. This functionality cannot be added to an existing BAS without deeply redesigning the hardware and the software of that product.

The problem "enforcing a captive portal" is split into two sub-problems:
a) Enforcing VPNO as a first VPN, as described in the second problem statement and
b) enforcing a portal page in the domain of VPN0.

The operator can easily enforce a portal page in the domain of VPN0. Having control over the servers in his domain, the operator installs a web-server, which serves the portal page always as first page. This can be done with several web-server programming techniques, e.g.: servlets, cgi, asp-pages.
The configuration of the connection policy (radius) server enforces the VPN0 as first the VPN. The Connection Policy RADIUS Server (CPRS) is a more general approach that can be used to implement a captive portal. Currently the BAS is an IP based systems that dynamically configures a user terminal (or other IP supporting machine) to become part of a VPN. The selection of the VPN is based on the domain-name that the user has to specify while logging in. The relation between the specified domain and the VPN is performed either in the BAS itself or delegated to an authentication server (AAA-server) via a authentication request (RADIUS-Protocol).
The user can select each VPN at any time by specifying the corresponding domain when setting up the PPP session. The authentication itself can be done by the BAS or the BAS delegates the authentication to an AAA-server depending on the connection policies configured in the BAS. The following list categorises the possible configurations:
1. The domain is determined by the BAS and the authentication is done by one or several AAA-servers. The AAA-server will only authenticate so that the VPN selection is controlled by the BAS. In case of one AAA-server the domain name will be included in the user name, so that the AAA-server can authenticate in the context of the specified domain. The BAS can also send the authentication request to a dedicated AAA-server, which handles the access to a specific domain. In this case the domain name has not to be send to the AAA-server, because the AAA-server knows its own domain in the context of the domain structure.
2. The domain name is sent transparently with the user name through the BAS to the AAA-server. The AAA-server authenticates and controls the VPN selection that will be performed by the BAS. The AAA-server can also act as an authentication proxy. In the latter case, the authentication itself is delegated to other AAA-servers.

The invention in the form of a CPRS is a guard on top of the straight domain related authentication. This guard function is realized by making the domain check or authentication state full. In one embodiment, this state could be kept in the BAS itself. This would however require changes in the BAS. But when the guard function has to personalized, it would bring profile complexity that belongs more to the AAA-servers than to the BAS. This makes the first configuration model as described above not very interesting. However, it should be mentioned that this configuration is also part of the invention.

In the preferred embodiment, the CPRS is based on the second configuration model. The CPRS acts as a stateful AAA-proxy. E.g. a proxy simulates an AAA-server by using the same sockets, the same protocol and having a similar behaviour. The state stores different times, like login-time, logoff-time. Furthermore, the state stores the behaviour of the user in current and previous connections. Other data can be stored too. These data can be combined with other policies, like the place from which the user is connected to the network, etc. However, in the conventional configuration these latter parameters can be checked by the AAA-server itself, whereas the maintenance of the state concerning the connection has to be done at a place where all the authentication requests pass. The decisions of the CPRS can base on the information of the state. The CPRS can choose to authenticate the user and control the BAS, to connect the user to the selected VPN or to the captive VPN, or to reject the request.

In the preferred embodiment, the CPRS as such is implemented as a simple stateful AAA-proxy, or as a full-blown AAA server. It is also possible to integrate the CPRS in the BAS. In any case it is easy to insert the CPRS in the form of a proxy in an existing environment. The CPRS can run on a separate machine (e.g. computer) or can be integrated in already existing machines like AAA-server or AAA-proxies. The existing AAA-servers do not need to be aware of the inserted CPRS. Only the BAS have to be configured according to the second configuration model and select the CPRS as an AAA-server.

The CPRS uses a unique key associated with an end-user logged in to VPN0. This key is used to associate the access requests from the same user to other VPN's, where he might be known by an other username, to the initial access session in VPN0. The use of a unique key (sometimes called "access id") to associate information is as such not a new idea. But the use of such a key in order to associate different access requests to an initial access session (to VPNO) is part of this invention.

Previously the access to network was controlled by policies in the BAS and authentication in the AAA-server. With the CPRS, the access control criteria become state dependent now and can be even personalized. The CPRS uses the capabilities of the AAA-proxy in the network. This solution is based on the powerful combining of authentication with VPN selection control next to the BAS in a stateful way.

There are several advantages of this solution.
The CPRS is independent of the BAS or AAA server, and can be applied without any changes to the BAS or AAA server.
This provides a system to enforce policies that makes it possible to define a certain VPN as the first VPN for all application on top of IP in a very easy way.
When the enforcement is used to create a captive portal for http applications, this enforcement can be configured per user or group.
Furthermore, this solution does not introduce a new protocol. It is based on the standardized protocol RADIUS, and will as such fit in any environment that uses RADIUS.

The forced selection of the portal by the CPRS is one of the key concepts making the product interesting to the broadband access network operators. The integration of the product generates more revenue.

### Detailed Discription

Part of the invention is a method of managing the access to a network. The network includes an access server (BAS, RAS) that manages the connection of a remote client computer. The client computer is normally connected via dsl (adsl, sdsl), isdn or modem, to the access server. This connection will normally be established with PPP (Point to Point Protocol). It should be clear that all protocols, that provide the same functionality may be used. The protocols, which have been mentioned in this document, are only examples. PPP for example is used as a protocol to set-up a connection and allows to specify authentication parameters, username and password, as an indication of the selected VPN. Another protocol that has to same functions can be used in place, e.g. L2TP.
RADIUS is used as a protocol between the RADIUS client (access server) and an AAA server. The successor of RADIUS, called DIAMETER or similar protocols could be used in place.
The access server manages the information flow on the lower levels of the protocol layers. The access server is physically connected to one or more Networks. These networks may be logical subdivided in VPN (virtual private networks).
After the access server has received the authentication request from the client, e.g. login information, the access server forwards the authentication request to the connection policy server using the RADIUS protocol. The configuration of the access server for a connection with an AAA-server includes the Domain-name or the IP-Address of the connection policy server. The proxy behaviour of the connection policy server makes this configuration possible.
After receiving a RADIUS request, the connection policy server loads from a database rules and information, which are executed to determine whether the authentication request may be forwarded to an authentication-server or not. The rules may also determine to which authentication-servers the authentication request has to be sent, or determine when or in which form the authentication request has to be forwarded.
Depending on the result of the rule execution and the determination the connection policy server blocks or forwards the authentication request to one or more specific servers, in particular authentication server. The allow and forward action is a transparent action between the BAS and the AAA server. When the CPRS blocks the request it denies the request by sending a negative response message without even contacting the AAA server. In some cases, the server modifies or/and delays the authentication request before forwarding. This can be done by forwarding the request but manipulating the response message. This part of the patent text describes in fact a variant on the idea of "policing the order in which the end-user connects to VPNs". It describes a way in which the selected domain can be manipulated. This however leads into some special condition, which has to be treated with care as described in the text. As this analysis is competition sensitive information, I suggest removing it from this patent text. As it is in fact a variant on this invention I suggest creating a separate patent for this.

In the preferred embodiment intercepting the authentication messages does the enabling of the policies by the CPRS. The accounting messages are intercept to be informed about what's going on: e.g. is the connection really setup and when it is disconnected.

The policy server, tracks and stores connection parameters of the client computer to create a profile. The so stored information influences the execution of the rules.

To personalize the information and the execution of the rules the rules and the information are stored in relation to the authentication data, in particular in relation to domains and user names.

To allow the execution of the above-mentioned method the connection policy server has at least one network interface, that allows a communication to an access server or/and an authentication server. If the authentication server is a stand-alone system, the network interface is used to establish a connection to both, the access and the authentication server.
Furthermore, a communication module accepts, maintains or cancels communications channels to the access server and the authentication server. Sockets using IP do this. The communication module uses the network drivers. The communication module implements the protocols the system is using. Normally the protocol is located above the IP layer.
A storage module administers information and rules, which are preferably stored in relation to the authentication data.
The server comprises a processing module that analyses the authentication requests, being transmitted from the access server, by loading and applying the rules and information stored in the storage module. In a preferred embodiment the processing module queries the database to determine whether the authentication request has to be blocked or may be forwarded to the authentication server. Other processing possibilities are the forwarding to multiple servers, in particular authentication servers, or the modification. In special cases, the processing unit may delay the forwarding to connect the client system to another VPN, e.g. VPN0.
The policy server may also have a connection to a sniffer module, analysing the information traffic to retrieve supplemental user specific and behaviour specific information, which are stored by the storage module. Using this module the CPRS can collect more interesting information about the user to build a specific and detailed profile.

The above-mentioned server can be a stand-alone system that is integrated in the network or it is integrated in the authentication-server or in the BAS, in particular as additional software.
In a possible version, the authentication is done by the CPRS itself.

As earlier mentioned the server simulates the behaviour of the authentication server, in particular in the form of a proxy, by using the same protocol and the same ports. Normally the authentication request is compatible to the RADIUS protocol.

Another part of the invention is a network system comprising the described components that allows the execution of the above-mentioned method.

A further component of the invention is a computer loadable data structure, that provides the above-mentioned method while executed on a computer.

Although no multiple referenced claims are drawn all reasonable combinations of the features in the claims shall be disclosed.

### Description of the drawings

For a more complete understanding of the present invention, reference is established to the following description made in connection with accompanying drawings in which:
Fig. 1 Shows a network consisting of a plurality of VPNs that are managed by different AAA-servers, wherein a remote client is connected to a stand-alone CPRS via the BAS;
Fig. 2 shows a network corresponding to Fig. 1, wherein the CPRS is integrated in one AAA-server, that manages all VPNs;

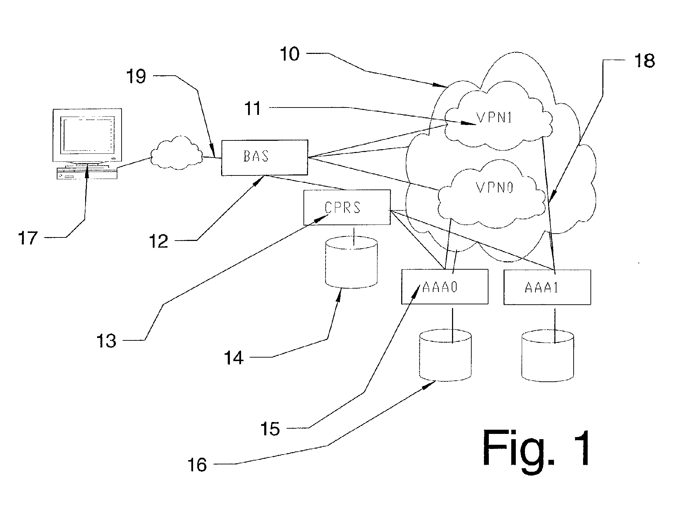

Figure 1 shows a user client terminal 17 that sends a request to set up a connection with an access server 12. After receiving the message, the access server sends an authentication request using the RADIUS protocol to the CPRS 13. The CPRS 13 checks if according to the client computer's policies the client is allowed to access the dedicated VPN. The policies are stored in a policy database 14. Whenever the CPRS receives a request, it loads the corresponding policies and information that may be applied to the policies. There may also be a cache, that prefetches information. The CPRS may block, delay, modify or copy the request before forwarding the request to an AAA-server 15. By copying and forwarding the requests to several AAA-servers the client may have access to a plurality of VPN.
If both conditions, i.e. reply of AAA server and the policies are fulfilled, the policy manager sends a positive response to the access server.
The following information doesn't pass the CPRS, so that the CPRS is not the bottleneck of the network. The end-user is connected to the BAS via the access network; this is a connection on layer 2. The PPP protocol uses layer 2 and 3 and establishes a connection at level 3, i.e. it will provide an IP connection to a VPN. The CPRS is used during the connection set-up. Once the IP layer is established between the end-user and the VPN, the data stream goes via the BAS directly to the VPN, without passing via the CRPS (routing).

The dashed lines 17 show logical connections, whereas the solid lines 18 show physical connections. A logical connection is established via a specific protocol.

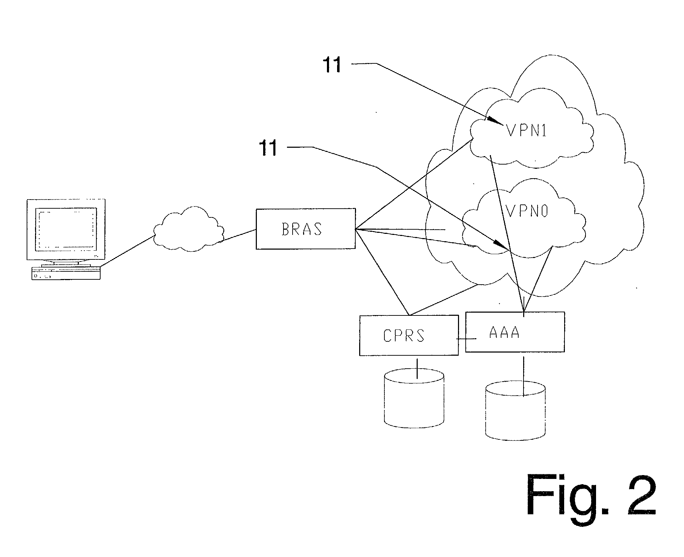

Figure 2 shows one AAA-server with an integrated CPRS (one hardware), that manages several VPNs. The AAA-server has an authentication database 16 in which the access data is stored.

## Claims

1. A method of managing the access to a network, said network including an access server, wherein said access server manages the connection of a remote client computer,
said access server forwarding authentication request delivered by said remote client to a connection policy server,
said connection policy server loading from a database rules and information, which are executed to determine whether said authentication request may be forwarded to an authentication-server or not, or/and to determine to which authentication-servers said authentication request has to be sent to, or/and determine when or/and in which form the authentication request has to be forwarded,
depending on the result of said execution and said determination said connection policy server blocks or forwards the authentication request to one or more specific servers, in particular authentication server, or/and modifies or/and delays said authentication request before forwarding.

2. The method according to the previous claim, wherein said policy server, tracks and stores connection parameters and transferred data.

3. The method according to the previous claim, wherein said tracked and stored information influence said execution of said rules.

4. The method according to claim 1, wherein said information and/or rules are stored in relation to authentication data, in particular to domains and/or user names.

5. The method according to claim 1, wherein said authentication request is conform with the RADIUS-Protocoll.

6. The method according to claim 1, wherein only RADIUS requests are intercepted.

7. The method according to claim 1, wherein said connection policy radius server simulates an authentication server in a proxy behaviour.

8. A connection policy server
with a least one network interface, that allows a communication to an access server and/or an authentication server,
with a communication module, that accepts, maintains or/and cancels communications channels to said access server and said authentication server,
with a storage module, that administers the information and/or to rules, wherein means may store said information and/or rules in relation to said authentication data,
with a processing module, that analyses the authentication requests, which have been transmitted from the access server, by applying said rules and information stored in the storage module, determining whether said authentication request is blocked or forwarded to the authentication server, or/and is forwarded to multiple servers, in particular authentication servers, or/and is modified or/and delayed before forwarding.

9. The server according the previous claims, wherein an analysing module, in particular a sniffer module, analysis the information traffic to retrieve user specific or behaviour specific information, which are stored by the storage module.

10. The server according to claim 9, wherein the server is a stand-alone system that is integrated in the network, it is integrated in said authentication-server, in particular as an additional software, or it is integrated in said access server.

11. The server according to claim 9, wherein the server simulates the behaviour of said authentication server, in particular in the form of a proxy, by using the same protocol and the same ports.

12. The server according to claim 9, wherein said authentication request is conform to the RADIUS protocol.

13. A network system with an access server, wherein said access server manages the connection of a remote client computer, with an authentication server, and with an connection policy server according to the server claim 9.

14. A network system with means allowing the execution of said method according to the method claim 1.

15. A computer loadable data structure, that provides the method according to the previous method claim 1 while being executed on a computer.
